# FASCICULE DE BREVET EUROPEEN

(11) **EP 2 527 195 B1**
(45) Date de publication et mention de la délivrance du brevet: **24.07.2013**
(21) Numéro de dépôt: 12305361.3
(22) Date de dépôt: 29.03.2012
(51) Int. Cl.: B60N 2/10, B60N 2/30, B60R 7/04

(54) **Agencement de siège escamotable et dispositif de rangement d'objes sous siège pour véhicule automobile et véhicule automobile ainsi équipé**
Versenkbare Sitzanordnung und Vorrichtung zum Unterbringen von Gegenständen unter dem Sitz für Kraftfahrzeug, und damit ausgestattetes Kraftfahrzeug
Stowable seat arrangement and device for storing objects under the seat for a motor vehicle and motor vehicle equipped therewith

(30) Priorité: 24.05.2011 FR 1154491
(43) Date de publication de la demande: 28.11.2012
(73) Titulaire: Renault S.A.S., 92100 Boulogne-Billancourt (FR)
(72) Inventeur: Jacquemot, Pierre, 78960 VOISINS LE BRETONNEUX (FR); Holleville, Francis, 78470 SAINT REMY LES CHEVREUSE (FR)

(56) Documents cités:
- EP-A1- 1 297 996
- FR-A1- 2 902 742
- US-A1- 2002 047 287
- US-A1- 2003 193 205

## Description

L'invention concerne un agencement de siège escamotable et dispositif de rangement d'objets sous siège pour véhicule automobile et le véhicule automobile ainsi équipé.

L'invention concerne en particulier un agencement de siège escamotable sous le plancher du véhicule pourvu d'un dispositif de rangement d'objets dans l'espace ménagé sous le plancher et le siège du véhicule, par exemple l'espace sous coffre de deuxième ou troisième rang du véhicule automobile.

On connaît des dispositifs de rangement d'objets à tiroirs fixes sous des sièges escamotables de véhicules automobiles.

Le siège doit être rehaussé pour l'implantation du tiroir sous le siège, le tiroir occupant un volume en permanence, au dessus du plancher du coffre du véhicule, ce qui réduit le volume de ce dernier.

Le document US 2002/0047287 décrit un agencement de siège selon le préambule de la revendication 1.

Il existe un besoin pour un agencement de siège escamotable et dispositif de rangement d'objets pour des sièges escamotables sous le plancher du véhicule qui ne nécessite pas un volume supplémentaire pour son implantation dans le véhicule.

Il est proposé un agencement de siège escamotable pour véhicule automobile, **caractérisé en ce que** l'agencement comprend :
- un espace destiné à être situé sous le plancher du véhicule,
- au moins un siège escamotable mobile entre une position dépliée d'utilisation au moins en partie hors de l'espace et une position repliée escamotée à l'intérieur de l'espace et,
- au moins un dispositif de rangement d'objets comprenant au moins un tiroir mobile dans l'espace sous le plancher du véhicule, le tiroir étant agencé pour pouvoir être déplacé entre une première position située sous le siège en position dépliée et une deuxième position suffisamment éloignée de la première position afin de ménager dans l'espace un volume suffisant pour recevoir le siège en position repliée.

L'agencement peut comporter une unité de commande d'escamotage commandant le repliement du siège en liaison avec le mouvement du tiroir de sorte que le siège ne peut être replié tant que le tiroir n'est pas parvenu à sa deuxième position.

Ceci permet d'éviter tout blocage du repliement du siège dû à une mauvaise position du tiroir dans l'espace.

L'agencement peut comporter des moyens pour placer le tiroir à sa deuxième position avant le repliement du siège.

Par exemple, le siège comportant un dossier rabattable, ces moyens peuvent provoquer le déplacement du tiroir lors du rabattement d'un dossier rabattable.

Les moyens pour provoquer le passage du tiroir de la première position à la deuxième position peuvent comprendre:
- un moyen de guidage du tiroir dans son mouvement entre ses première et deuxième positions,
- des dispositifs de verrou du tiroir agencés pour verrouiller le tiroir dans ses première et deuxième positions et,
- un moyen moteur apte à entraîner le tiroir dans son déplacement entre ses première et deuxième positions.

Selon l'invention, le tiroir peut être déplacé dans l'axe longitudinal du véhicule entre une première position, par exemple vers l'avant du véhicule, et une deuxième position, par exemple vers l'arrière du véhicule respectivement.

Selon cette disposition, on profite de l'espace sous plancher perdu laissé libre par le siège escamotable lorsque ce siège est relevé en position de service, en partie hors de l'espace sous plancher. Dans cet espace libre on peut ainsi disposer le tiroir de rangement d'objets en position avant sous le siège.

Au repliement du siège, ce dernier reprend sa place dans l'espace sous plancher, précédemment occupé par le tiroir, le tiroir étant préalablement ramené dans sa deuxième position dans l'espace libre.

Les première et deuxième positions du tiroir sont avantageusement des positions extrêmes du tiroir à l'intérieur de l'espace sous plancher.

Le dispositif de rangement pourra être commun à deux sièges escamotables côte à côte. Il pourra alors comprendre soit un tiroir par siège escamotable, soit un tiroir unique pour les deux sièges escamotables.

L'espace sous plancher du véhicule est avantageusement un espace sous coffre du véhicule, pour un siège de 2^{ème} ou 3^{ème} rang d'un véhicule.

Cette disposition permet de ménager un espace sous coffre de véhicule qui autorise le rangement d'objets à disposition sous le siège escamotable de 2^{ème} ou 3^{ème} rang, sans nécessiter le rehaussement du siège par rapport au plancher du véhicule. L'espace sous plancher (ou le siège) n'a donc pas besoin d'être rehaussé et le volume du coffre est ainsi préservé.

Avantageusement, le tiroir peut être pourvu d'un couvercle.

Ce couvercle peut être agencé pour pouvoir être ouvert par une personne accédant à l'espace sous plancher lorsque le siège est en position dépliée, par exemple accédant au coffre en arrière du siège déplié lorsque la deuxième position est une position arrière.

Ainsi, on évite le dépassement d'objets hors du tiroir et qui pourraient gêner le mouvement du tiroir dans l'espace sous plancher du véhicule.

Des objets peuvent en outre être disposés dans le tiroir dans sa deuxième position. Notamment, lorsque la deuxième position du tiroir est une position arrière par rapport au siège, des objets peuvent être disposés sur le couvercle du tiroir mobile en position arrière dans l'espace sous coffre, par exemple en ouvrant le sous coffre depuis le coffre du véhicule, par exemple par une trappe de l'espace sous coffre.

On peut ainsi préparer les objets à l'avance dans le tiroir de rangement du passager à transporter sur le siège escamotable.

Ainsi, le couvercle pourra être suffisamment rigide pour pouvoir supporter des objets.

De plus, on peut utiliser tout l'espace disponible sous le plancher du véhicule, en particulier au dessous du plancher de coffre.

On comprendra que l'espace sous plancher est ouvert pour permettre le dépliement du siège escamotable. Cet espace sous plancher peut être totalement ouvert, et présenter par exemple une forme générale de bac, ou peut être partiellement ouvert et présenter une ou plusieurs ouvertures suffisamment grandes pour permettre le dépliement du ou des sièges escamotables. Une ou plusieurs ouvertures supplémentaires situées au dessus de la deuxième position du ou des tiroirs peuvent permettre l'accès à ce(s) dernier(s).

Accessoirement, une paroi amovible ferme l'espace sous plancher au dessus du tiroir dans sa deuxième position. Avantageusement, cette paroi amovible peut être suffisamment résistante pour supporter des objets ou une personne.

Cette paroi amovible peut être un plancher amovible de sous coffre, par exemple une plaquette de sous coffre ou un tapis de coffre.

L'espace sous plancher de l'agencement peut comporter des dispositifs de verrou du tiroir agencés pour verrouiller le tiroir dans ses première et deuxième positions. Ces dispositifs de verrou empêchent tout mouvement intempestif du tiroir au cours du roulement du véhicule.

Le tiroir peut être entraîné dans son déplacement vers l'avant ou l'arrière par un moyen moteur solidaire de l'agencement, par exemple du type à traction par un câble solidaire du tiroir, ou par une crémaillère ou une vis sans fin actionnée par un moteur électrique.

Avantageusement, le moyen moteur est un moyen de rappel du tiroir en sa deuxième position, par exemple la position arrière, tel qu'un ressort hélicoïdal relié au tiroir et à une partie d'extrémité arrière de l'espace sous plancher, le tiroir étant alors tiré manuellement en position avant.

Selon cette dernière disposition, le tiroir est maintenu dans sa première position, par exemple la position avant, par le dispositif de verrou de première position, lequel est débloqué pour permettre le retour automatique en deuxième position, par exemple la position arrière, du tiroir avant repliement du siège.

Le moyen moteur est avantageusement agencé pour être commandé en liaison avec le mouvement de repliement du siège, de sorte que le siège ne peut être replié tant que le tiroir n'est pas parvenu à sa deuxième position, par exemple la position arrière, ou tant que le dispositif de verrou de deuxième position du tiroir n'est pas engagé.

Le moyen moteur peut être commandé par le passager au moyen d'une unité de commande comportant :
- un élément de commande du tiroir en première position sous le siège et en deuxième position, et
- un élément de commande du siège en position dépliée et en position repliée escamotée.

L'unité de commande peut comporter en outre deux contacteurs de fin de course du tiroir et un contacteur d'ouverture du siège, le contacteur de première position du tiroir et le contacteur de deuxième position du tiroir étant aptes à détecter que le tiroir est en première position et en deuxième position respectivement, et le contacteur d'ouverture du siège étant apte à détecter l'engagement en position dépliée de service du siège.

La commande d'autorisation d'entraînement du siège en position escamotée nécessite que le contacteur de première position soit ouvert (contact non actionné) et que le contacteur de deuxième position soit fermé (contact actionné).

La commande d'autorisation d'entraînement du tiroir en première position sous le siège nécessite que le contacteur d'ouverture du siège et le contacteur de deuxième position du tiroir soient fermés.

Le tiroir est avantageusement monté sur une glissière ou navette de guidage centrale, laquelle empêche le tiroir en raison de sa grande largeur, supérieure à sa course, de se mettre en travers sur son chemin de mouvement de la première position à la deuxième position.

De plus, cette glissière ou navette guide peut actionner le contact de position arrière, ce qui permet de démonter le tiroir pour le nettoyage par exemple et évite la mise en panne de l'ouverture du siège, tiroir enlevé.

Il est également proposé un procédé de mise en oeuvre d'un tel agencement, comprenant pour la mise en position du tiroir sous siège, siège ouvert, les étapes suivantes :
- le déverrouillage du dispositif de verrou de la deuxième position du tiroir.
- l'entraînement manuel ou par le moyen moteur du déplacement du tiroir vers la première position,
- la fermeture du contacteur de première position du tiroir, et
- le verrouillage du dispositif de verrou de première position du tiroir.

La commande de repliement du siège, tiroir en position sous le siège, engage les étapes suivantes :
- le déverrouillage du dispositif de verrou de première position du tiroir,
- la commande de mouvement du déplacement du tiroir en deuxième position,
- la fermeture du contacteur de deuxième position du tiroir,
- le verrouillage du dispositif de verrou de deuxième position du tiroir,
- la commande de déblocage de l'ouverture du siège, et
- le repliement du siège sous le plancher, par moteur ou manuellement.

Il est également proposé un véhicule automobile comportant un agencement de siège escamotable, tel que décrit ci-dessus.

Un mode de réalisation de l'invention est à présent décrit à titre non limitatif et en référence aux dessins annexés, sur lesquels :
- La fig. 1 est une vue schématique en coupe longitudinale d'un agencement de siège escamotable pour un véhicule automobile, en position ouverte du siège et tiroir de rangement sous le siège, selon le mode de réalisation précité,
- La fig. 2 est une vue analogue à la fig. 1 montrant le siège en position repliée sous le plancher de coffre du véhicule,
- La fig.3 est une vue schématique montrant les éléments de la cinématique de mouvement du tiroir de l'agencement, et
- la fig. 4 est une vue en coupe transversale de l'agencement montrant le guidage du tiroir.

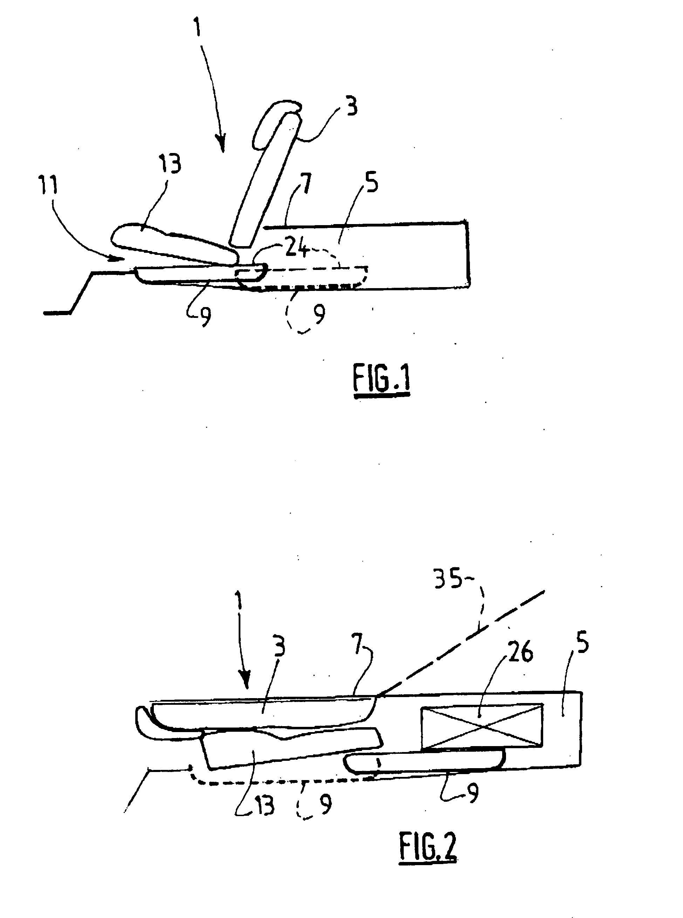

Avec référence aux dessins et en particulier aux fig.1 et 2, l'agencement de siège escamotable 1 selon le mode de réalisation précité de l'invention comprend deux sièges escamotables identiques 3 disposés côte à côte dans l'espace sous coffre 5 (sous le plancher 7 du coffre), et deux tiroirs mobiles identiques 9, également disposés côte à côte et en regard chacun d'un siège 3.

Chacun des tiroirs 9 est mobile dans l'axe longitudinal du véhicule, respectivement d'une position arrière (en trait interrompu sur la fig.1) proche de la partie arrière de l'espace sous coffre 5 à une position avant (en trait plein), à l'extrémité avant de l'espace sous coffre 5.

Les sièges escamotables 3 sont des sièges de troisième rang (troisième rangée de sièges du véhicule).

Ces sièges lorsqu'ils ne sont pas utilisés (fig.2) sont escamotés dans l'espace sous coffre 5, augmentant ainsi le volume du coffre du véhicule.

L'espace sous coffre 5 se présente sous la forme d'un bac ouvert.

En position ouverte (fig.1), les sièges sont relevés et ménagent sous ces derniers dans l'espace sous coffre 5 un volume libre dans lequel peut être disposé le tiroir 9 en position avant. Dans cette position, le passager sur le siège peut accéder ou non au tiroir 9 par l'espace éventuellement ouvert 11 entre le bord supérieur avant du tiroir et le dessous de l'assise 13 du siège, pour y déposer ou prélever des objets.

Naturellement, le tiroir 9 peut demeurer en position arrière (en trait interrompu) s'il n'est d'aucune utilité pour le passager.

En position escamotée ou repliée, le siège est rabattu sur lui-même (fig.2) et la partie d'assise 13 vient dans la partie avant de l'espace sous coffre, précédemment occupée par le tiroir en position avant.

Le tiroir est donc nécessairement amené en position arrière pour permettre la position repliée du siège.

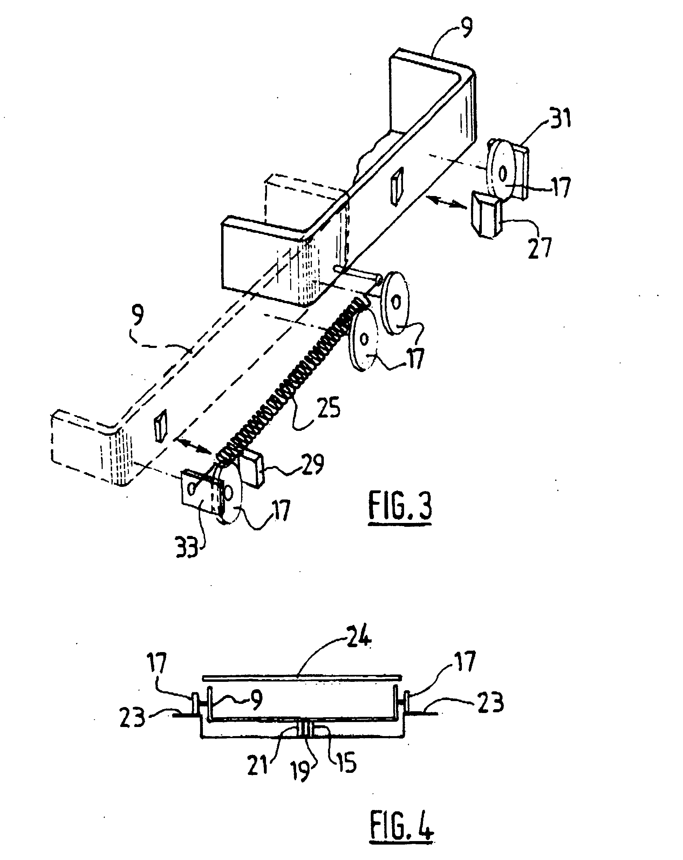

Comme on le voit sur les fig. 3 et 4, le tiroir 9 est guidé dans son déplacement de la position arrière à la position avant ou inversement par l'ensemble d'une glissière inférieure 15 et de quatre roulettes 17, une à chaque coin du tiroir.

La glissière 15 est une glissière longitudinale médiane du tiroir comportant par exemple un rail 19 du tiroir coulissant dans une rainure complémentaire 21 solidaire de l'espace sous coffre 5.

Les roulettes 17 roulent sur des épaulements longitudinaux 23 formés dans l'espace sous coffre 5.

Il est à noter que le tiroir, grâce à cette disposition, peut facilement être sorti de son logement sous coffre, par exemple pour permettre son nettoyage ou enlever des objets éventuellement tombés sous le tiroir, depuis l'espace sous coffre à l'arrière du véhicule.

Par ailleurs, le tiroir est pourvu d'un couvercle 24 supérieur, ce qui empêche que des objets en saillie ne gênent le mouvement du tiroir. De plus, d'autres objets 26 peuvent être déposés sur le couvercle 24 par l'espace sous coffre (fig.2).

Le tiroir 9 est relié latéralement à un ressort hélicoïdal 25 (fig.3), lui-même relié à la partie arrière de l'espace sous coffre 5. Ce ressort 25 est destiné à rappeler le tiroir en position arrière (en trait interrompu) lorsqu'il est disposé en partie avant (en trait plein).

Pour disposer le tiroir sous le siège (ouvert), il suffit de le pousser manuellement, par exemple par une poignée arrière (non représentée).

Un verrou électrique latéral 27 disposé à la partie avant de l'espace sous coffre 5 permet de verrouiller le tiroir 9 en position avant.

De même un verrou latéral 29 (optionnel) ou un élément de maintien analogue (aimant ou point dur) disposé à la partie arrière de l'espace sous coffre 5 permet de verrouiller le tiroir 9 en position arrière.

Un contacteur électrique latéral 31 en position avant de l'espace sous coffre 5, actionné par le tiroir en position avant (par contact de la roulette), permet de détecter que le tiroir est en position avant.

De même, un contacteur électrique latéral 33 en position arrière de l'espace sous coffre permet de détecter que le tiroir est en position arrière (par contact de la roulette).

Ces contacteurs 31, 33 sont reliés à une unité de commande (non représentée), laquelle peut comporter un bouton de commande d'entraînement du tiroir sous le siège depuis la position arrière ou inversement, et un bouton de commande de repliement /ouverture du siège.

Avantageusement, l'unité de commande, qui peut être un processeur programmable ou faire partie d'un processeur, est programmée pour commander le repliement du siège 3 en liaison avec le mouvement du tiroir de sorte que le siège 3 ne peut être replié tant que le tiroir 9 n'est pas parvenu à sa deuxième position.

Le fonctionnement de l'agencement pour entrainer le tiroir sous le siège depuis sa position arrière est à présent décrit.

On réalise un premier appui sur le bouton de commande d'entraînement du tiroir.

L'unité de commande engage alors les étapes successives suivantes.

Le verrou 29 de position arrière du tiroir est libéré et le passager peut pousser le tiroir en position avant jusqu'à l'amener au contact du contacteur avant 31.

Le verrou 27 de position avant du tiroir est alors actionné, et le tiroir est alors rigidement maintenu en position avant.

La manoeuvre inverse d'entraînement du tiroir en position arrière, par exemple pour ranger des objets dans le tiroir, depuis le coffre du véhicule en ouvrant l'espace sous coffre (par une trappe d'accès 35), est commandée par un deuxième appui sur le bouton de commande d'entraînement du tiroir ou par un déverrouillage depuis une commande placée dans le coffre.

Les étapes suivantes sont alors réalisées.

L'unité de commande détecte l'actionnement du contacteur avant 31 et commande le verrou 27 de position avant pour qu'il soit libéré, ce qui permet au ressort 25 d'entraîner le tiroir en position arrière. A ce stade, le contacteur arrière 33 est actionné et le verrou 29 de position arrière (ou autre élément de maintien) est alors engagé, ce qui maintient le tiroir en position arrière.

A cette position arrière du tiroir, le siège 3 peut être replié. Cette manoeuvre peut être commandée par appui du passager sur le bouton de commande de repliement du siège.

L'unité de commande détecte que le tiroir est en position arrière (par actionnement du contacteur arrière 33). Elle autorise alors le déblocage de l'ouverture du siège (déblocage des doigts de blocage de l'ouverture angulaire assise dossier, non représenté) et le siège peut alors être replié manuellement (ou par entraînement moteur) sous le plancher 7 jusqu'au verrouillage de la position escamotée où le dossier forme plancher de l'espace sous coffre.

Si, à la commande de repliement du siège, le tiroir est en position arrière, le repliement du siège peut être immédiatement réalisé.

Si, à la commande de repliement du siège, le tiroir est en position avant, le tiroir est au préalable déplacé en position arrière suivant les opérations décrites précédemment, à savoir :
- détection de l'actionnement du contacteur avant 31 et commande du verrou 27 de position avant par l'unité de commande,
- entrainement en position arrière du tiroir ainsi libéré sous l'action du ressort 25,
- actionnement du contacteur arrière 33 et engagement du verrou 29 de position arrière (ou autre élément de maintien) pour maintenir le tiroir en position arrière.

Le tiroir, une fois positionné à l'arrière, autorise le siège à entrer en phase de repliement.

Naturellement, des variantes de réalisation peuvent entrer dans le cadre de l'invention.

Par exemple, le siège peut être remplacé par une banquette.

En outre, plus de deux tiroirs peuvent être disposés sous les deux sièges, par exemple trois ou quatre tiroirs adjacents.

## Revendications

1. Agencement de siège escamotable pour véhicule automobile, comprenant :
- un espace (5) situé sous le plancher (7) du véhicule,
- au moins un siège escamotable (3) mobile entre une position dépliée d'utilisation au moins en partie hors de l'espace (5) et une position repliée escamotée à l'intérieur de l'espace (5) et
- au moins un dispositif de rangement d'objets comprenant au moins un tiroir mobile (9) dans l'espace (5) sous le plancher (7) du véhicule, le tiroir (9) étant agencé pour pouvoir être déplacé entre une première position située sous le siège (3) en position dépliée et une deuxième position **caractérisé en ce que** la deuxième position est suffisamment éloignée de la première position afin de ménager dans l'espace (5) un volume suffisant pour recevoir le siège (3) en position repliée.

2. Agencement de siège escamotable selon la revendication 1, **caractérisé en ce qu'**il comprend une unité de commande d'escamotage commandant le repliement du siège (3) en liaison avec le mouvement du tiroir de sorte que le siège (3) ne peut être replié tant que le tiroir (9) n'est pas parvenu à sa deuxième position.

3. Agencement de siège escamotable selon l'une quelconque des revendications précédentes, **caractérisé en ce qu'**il comporte des moyens pour placer le tiroir (9) à sa deuxième position avant le repliement du siège (3).

4. Agencement de siège escamotable selon l'une quelconque des revendications précédentes, **caractérisé en ce que** le tiroir (9) est pourvu d'un couvercle (24).

5. Agencement de siège escamotable selon l'une quelconque des revendications précédentes, **caractérisé en ce qu'**une paroi amovible ferme l'espace (5) au dessus du tiroir (9) dans sa deuxième position, cette paroi étant par exemple suffisamment résistante pour supporter des objets.

6. Agencement de siège escamotable selon l'une quelconque des revendications précédentes, **caractérisé en ce que** l'espace (5) comporte un moyen de guidage (15, 17) du tiroir (9) dans son mouvement vers l'avant ou l'arrière.

7. Agencement de siège escamotable selon l'une quelconque des revendications précédentes, **caractérisé en ce que** l'espace (5) comporte des dispositifs de verrou (27, 29) du tiroir (9) agencés pour verrouiller le tiroir dans ses première et deuxième positions.

8. Agencement de siège escamotable selon l'une quelconque des revendications précédentes, **caractérisé en ce que** l'agencement comporte un moyen moteur (25) apte à entraîner le tiroir (9) dans son déplacement vers l'avant ou l'arrière.

9. Agencement de siège escamotable selon la revendication précédente, **caractérisé en ce que** le moyen moteur est un moyen de rappel (25) du tiroir en sa deuxième position.

10. Véhicule automobile comportant un agencement (1) de siège escamotable selon l'une quelconque des revendications précédentes.

## Patentansprüche

1. Versenkbare Sitzanordnung für ein Kraftfahrzeug, die Folgendes enthält:
- einen unter dem Boden (7) des Fahrzeugs befindlichen Raum (5),
- mindestens einen zwischen einer auseinandergeklappten Benutzungsstellung zumindest teilweise außerhalb des Raums (5) und einer zusammengeklappten versenkten Stellung innerhalb des Raums (5) beweglichen versenkbaren Sitz (3), und
- mindestens eine Vorrichtung zum Verstauen von Gegenständen, die mindestens einen im Raum (5) unter dem Boden (7) des Fahrzeugs beweglichen Einschub (9) enthält, wobei der Einschub (9) angeordnet ist, um zwischen einer ersten Stellung, die sich unter dem Sitz (3) in auseinandergeklappter Stellung befindet, und einer zweiten Stellung verschoben werden zu können,
**dadurch gekennzeichnet, dass** die zweite Stellung weit genug von der ersten entfernt ist, um im Raum (5) ein ausreichendes Volumen freizulassen, um den Sitz (3) in der zusammengeklappten Stellung aufzunehmen.

2. Versenkbare Sitzanordnung nach Anspruch 1, **dadurch gekennzeichnet, dass** sie eine Versenkungssteuereinheit enthält, die das Zusammenklappen des Sitzes (3) in Verbindung mit der Bewegung des Einschubs steuert, so dass der Sitz (3) nicht zusammengeklappt werden kann, solange der Einschub (9) nicht in seiner zweiten Stellung angekommen ist.

3. Versenkbare Sitzanordnung nach einem der vorhergehenden Ansprüche, **dadurch gekennzeichnet, dass** sie Einrichtungen aufweist, um den Einschub (9) vor dem Zusammenklappen des Sitzes (3) in seiner zweiten Stellung anzuordnen.

4. Versenkbare Sitzanordnung nach einem der vorhergehenden Ansprüche, **dadurch gekennzeichnet, dass** der Einschub (9) mit einem Deckel (24) versehen ist.

5. Versenkbare Sitzanordnung nach einem der vorhergehenden Ansprüche, **dadurch gekennzeichnet, dass** eine entfernbare Wand den Raum (5) über dem Einschub (9) in seiner zweiten Stellung verschließt, wobei diese Wand zum Beispiel ausreichend widerstandsfähig ist, um Gegenstände zu tragen.

6. Versenkbare Sitzanordnung nach einem der vorhergehenden Ansprüche, **dadurch gekennzeichnet, dass** der Raum (5) eine Führungseinrichtung (15, 17) des Einschubs (9) in seiner Vorwärts- oder Rückwärtsbewegung aufweist.

7. Versenkbare Sitzanordnung nach einem der vorhergehenden Ansprüche, **dadurch gekennzeichnet, dass** der Raum (5) Riegelvorrichtungen (27, 29) des Einschubs (9) enthält, die angeordnet sind, um den Einschub in seiner ersten und seiner zweiten Stellung zu verriegeln.

8. Versenkbare Sitzanordnung nach einem der vorhergehenden Ansprüche, **dadurch gekennzeichnet, dass** die Anordnung eine Antriebseinrichtung (25) aufweist, die den Einschub (9) in seine Verschiebung nach vorne oder nach hinten antreiben kann.

9. Versenkbare Sitzanordnung nach dem vorhergehenden Anspruch, **dadurch gekennzeichnet, dass** die Antriebseinrichtung eine Rückstelleinrichtung (25) des Einschubs in seine zweite Stellung ist.

10. Kraftfahrzeug, das eine versenkbare Sitzanordnung (1) nach einem der vorhergehenden Ansprüche aufweist.

## Claims

1. Stowable seat arrangement for a motor vehicle, comprising:
- a cavity (5) located beneath the floor (7) of the vehicle,
- at least one stowable seat (3) which can be moved between an unfolded position of use at least partially outside the cavity (5) and a folded retracted position inside the cavity (5) and
- at least one device for storing objects comprising at least one movable drawer (9) in the cavity (5) beneath the floor (7) of the vehicle, the drawer (9) being so arranged that it can be moved between a first position located beneath the seat (3) in the unfolded position and a second position, **characterized in that** the second position is sufficiently distant from the first position in order to create sufficient space in the cavity (5) for receiving the seat (3) in the folded position.

2. Stowable seat arrangement according to Claim 1, **characterized in that** it comprises a stowing control unit which controls the folding of the seat (3) in connection with the movement of the drawer such that the seat (3) cannot be folded until the drawer (9) has reached its second position.

3. Stowable seat arrangement according to either of the preceding claims, **characterized in that** it comprises means for placing the drawer (9) in its second position before the seat (3) is folded.

4. Stowable seat arrangement according to any one of the preceding claims, **characterized in that** the drawer (9) is fitted with a lid (24).

5. Stowable seat arrangement according to any one of the preceding claims, **characterized in that** a removable partition closes the cavity (5) above the drawer (9) in its second position, this partition being for example strong enough to support objects.

6. Stowable seat arrangement according to any one of the preceding claims, **characterized in that** the cavity (5) comprises a means (15, 17) for guiding the drawer (9) in its forward or rearward movement.

7. Stowable seat arrangement according to any one of the preceding claims, **characterized in that** the cavity (5) comprises lock means (27, 29) for the drawer (9), said means being arranged for locking the drawer in its first and second position.

8. Stowable seat arrangement according to any one of the preceding claims, **characterized in that** the arrangement comprises a drive means (25) designed to drive the drawer (9) in its forward or rearward movement.

9. Stowable seat arrangement according to the preceding claim, **characterized in that** the drive means is a means (25) for returning the drawer to its second position.

10. Motor vehicle comprising a stowable seat arrangement (1) according to any one of the preceding claims.
